# FASCICULE DE BREVET EUROPEEN

(11) **EP 4 034 433 B1**
(45) Date de publication et mention de la délivrance du brevet: **04.03.2026**
(21) Numéro de dépôt: 20772281.0
(22) Date de dépôt: 15.09.2020
(51) Int. Cl.: B60R 25/24, B60R 25/30, G07C 9/00

(54) **PROCÉDÉ DE DÉTECTION D'UN IDENTIFIANT POUR LE DÉMARRAGE PASSIF D'UN VÉHICULE**
VERFAHREN ZUR ERKENNUNG EINES IDENTIFIKATORS ZUM PASSIVSTARTEN EINES FAHRZEUGS
METHOD FOR DETECTING AN IDENTIFIER FOR PASSIVE STARTING OF A VEHICLE

(30) Priorité: 24.09.2019 FR 1910527
(43) Date de publication de la demande: 03.08.2022
(73) Titulaire: Valeo Comfort and Driving Assistance, 94000 Créteil (FR)
(72) Inventeur: RICHARD, Yves, 94046 Créteil CEDEX (FR); GEHIN, Frederic, 94046 Créteil CEDEX (FR); RODRIGUES, Gilbert, 94046 Créteil CEDEX (FR)
(74) Mandataire: Delaval, Guillaume Laurent
(86) Numéro de dépôt international: PCT/EP2020/075749
(87) Numéro de publication internationale: WO 2021/058332

(56) Documents cités:
- DE-A1- 102018 002 969
- FR-A1- 2 986 202
- FR-A1- 3 025 641
- FR-A1- 3 047 085
- FR-A1- 3 077 944
- US-A1- 2014 188 309
- US-A1- 2018 029 560
- US-A1- 2019 130 682

## Description

La présente invention se rapporte à un procédé de détection d'un identifiant pour le démarrage passif d'un véhicule. Elle trouve une application particulière mais non limitative dans les véhicules automobiles.

Dans le domaine des véhicules automobiles, il existe des procédés de détection d'un identifiant pour le démarrage passif d'un véhicule automobile qui permettent de déterminer si l'identifiant est à l'intérieur du véhicule automobile avec une marge n'excédant pas vingt centimètres autour du véhicule automobile selon une réglementation Thatcham bien connue de l'homme du métier. A cet effet, l'identifiant est posé sur une surface d'accueil située à l'intérieur de l'habitacle. Cela permet de confirmer que l'identifiant se situe bien à l'intérieur du véhicule automobile. A ce moment, le démarrage du véhicule automobile est autorisé. On s'assure ainsi que personne ne pourra démarrer le véhicule automobile alors que l'utilisateur du véhicule et son identifiant se trouve à l'extérieur dudit véhicule. Des identifiants utilisant la technologie Bluetooth Low Energy^{®}, autrement appelée BLE, sont fréquemment utilisés et le véhicule automobile comporte un émetteur/récepteur qui communique avec lesdits identifiants via ladite technologie Bluetooth Low Energy^{®}. Lorsque de tels identifiants sont utilisés, une calibration est nécessaire avant chaque première utilisation des fonctions passives du véhicule automobile avec un nouvel identifiant. Cette calibration est déclenchée manuellement par l'utilisateur de l'identifiant.

Un inconvénient de cet état de la technique est qu'en effectuant la calibration, l'utilisateur peut fausser volontairement ou involontairement la calibration. Dans ce cas, les distances autorisées pour le démarrage passif risquent d'être non conformes aux critères Thatcham.

US 2014/188309 A1 divulgue un système d'accès et de démarrage passif pour un véhicule. FR 3 025 641 A1 divulgue un procédé de détection d'un identifiant pour le démarrage d'un véhicule automobile.

Dans ce contexte, la présente invention vise à proposer un procédé de détection d'un identifiant pour le démarrage passif d'un véhicule qui permet de résoudre l'inconvénient mentionné.

A cet effet, l'invention propose un procédé de détection d'un identifiant pour le démarrage passif d'un véhicule, ledit identifiant comprenant un émetteur/récepteur primaire et ledit véhicule comprenant un émetteur/récepteur secondaire et une surface d'accueil configurée pour accueillir ledit identifiant, selon lequel ledit procédé de détection comprend :
- une réalisation d'une pluralité de mesures de puissance en réception (RSSI) de signaux reçus,
- une comparaison desdites mesures de puissance en réception avec une puissance seuil,
- une détection que ledit identifiant est en contact ou à proximité immédiate de ladite surface d'accueil si les mesures de puissance en réception sont supérieures ou égales à la puissance seuil et si une condition de stabilité est vérifiée.

Ainsi, comme on va le voir en détail ci-après, le fait de réaliser au moins deux tests groupés, un par rapport à la puissance seuil et, un par rapport à la stabilité dans le temps des mesures de puissance en réception et/ou un par rapport à la stabilité de l'identifiant, permet d'être sûr que l'identifiant est en contact ou à proximité immédiate de la surface d'accueil et reste en contact ou à proximité. En conséquence, suite à cette détection, une calibration peut être lancée automatiquement lors de la première utilisation de l'identifiant avec le véhicule, et l'identifiant peut par la suite être utilisé pour le démarrage passif du véhicule.

Selon des modes de réalisation non limitatifs, le procédé de détection peut comporter en outre une ou plusieurs caractéristiques supplémentaires prises seules ou selon toutes les combinaisons techniquement possibles, parmi les suivantes.

Selon un mode de réalisation non limitatif, les signaux reçus sont reçus par ledit émetteur/récepteur primaire et les signaux émis sont émis par ledit émetteur/récepteur secondaire, ou inversement.

Selon un mode de réalisation non limitatif, ledit identifiant est à proximité immédiate de ladite surface d'accueil lorsqu'il est à une distance inférieure à environ vingt centimètres.

Selon un mode de réalisation non limitatif, la condition de stabilité est que lesdites mesures de puissance en réception sont stables sur ledit intervalle de temps et/ou que ledit identifiant est stable.

Selon un mode de réalisation non limitatif, l'intervalle de temps est inférieur à environ cinq secondes.

Selon l'invention, la vérification que ledit identifiant est stable est réalisé via un accéléromètre intégré dans ledit identifiant ou via une caméra intégrée dans ledit véhicule.

Selon un mode de réalisation non limitatif, ledit procédé de détection comprend en outre une calibration automatique dudit émetteur/récepteur primaire avec ledit émetteur/récepteur secondaire suite à ladite détection dudit identifiant en contact ou à proximité immédiate de ladite surface d'accueil.

Selon un mode de réalisation non limitatif, ledit procédé de détection comprend en outre la relance d'une calibration de façon automatique tous les N démarrages dudit véhicule, avec N supérieur ou égal à cinquante.

Selon un mode de réalisation non limitatif, la relance de ladite calibration via une interface homme-machine dudit identifiant.

Selon un mode de réalisation non limitatif, ledit procédé de détection comprend en outre l'annulation de ladite calibration si ledit identifiant redevient mobile lors de ladite calibration.

Selon un mode de réalisation non limitatif, ledit procédé de détection comprend en outre une autorisation de démarrage passif dudit véhicule suite à ladite détection et à ladite calibration.

Selon un mode de réalisation non limitatif, ledit identifiant est un téléphone mobile intelligent.

Il est en outre proposé un identifiant pour le démarrage passif d'un véhicule, ledit identifiant comprenant un émetteur/récepteur primaire et ledit véhicule comprenant un émetteur/récepteur secondaire et une surface d'accueil configurée pour accueillir ledit identifiant, selon lequel ledit identifiant est configuré pour comprend :
- réaliser une pluralité de mesures de puissance en réception de signaux reçus, signaux reçus correspondants à des signaux émis par ledit émetteur/récepteur secondaire,
- comparer lesdites mesures de puissance en réception avec une puissance seuil,
- détecter qu'il est en contact ou à proximité immédiate de ladite surface d'accueil si les mesures de puissance en réception sont supérieures ou égales à la puissance seuil et si une condition de stabilité est vérifiée.

Selon un mode de réalisation non limitatif, ledit identifiant est un téléphone mobile intelligent.

Il est en outre proposé une unité centrale électronique d'un véhicule configurée pour :
- réaliser une pluralité de mesures de puissance en réception de signaux reçus, signaux reçus correspondants à des signaux émis par un émetteur/récepteur primaire d'un identifiant pour le démarrage passif dudit véhicule,
- comparer lesdites mesures de puissance en réception avec une puissance seuil,
- détecter que ledit identifiant est en contact ou à proximité immédiate de ladite surface d'accueil si les mesures de puissance en réception sont supérieures ou égales à la puissance seuil et si une condition de stabilité est vérifiée.

L'invention et ses différentes applications seront mieux comprises à la lecture de la description qui suit et à l'examen des figures qui l'accompagnent :
[Fig. 1] illustre schématiquement un procédé de détection d'un identifiant pour le démarrage passif d'un véhicule, ledit identifiant comprenant un émetteur/récepteur primaire et ledit véhicule comprenant un émetteur/récepteur secondaire et une surface d'accueil configurée pour accueillir ledit identifiant, selon un mode de réalisation non limitatif de l'invention,
[Fig. 2] illustre schématiquement ledit procédé de détection de la figure 1, ledit procédé de détection comprenant une étape supplémentaire de calibration, selon un mode de réalisation non limitatif,
[Fig. 3] illustre schématiquement un identifiant pour le démarrage passif d'un véhicule et ledit véhicule comprenant une unité centrale électronique, ledit identifiant et ladite unité centrale électronique étant configurés pour mettre en œuvre le procédé de détection de la figure 1, selon un de réalisation non limitatif,
[Fig. 4] illustre schématiquement ledit identifiant et ladite unité centrale électronique de la figure 3, selon un premier mode de réalisation non limitatif,
[Fig. 5] illustre schématiquement ledit identifiant et ladite unité centrale électronique de la figure 3, selon un deuxième mode de réalisation non limitatif,
[Fig. 6] illustre schématiquement des niveaux de mesures de puissance en réception de signaux reçus par l'identifiant ou par le véhicule, selon un mode de réalisation non limitatif.

Les éléments identiques, par structure ou par fonction, apparaissant sur différentes figures conservent, sauf précision contraire, les mêmes références.

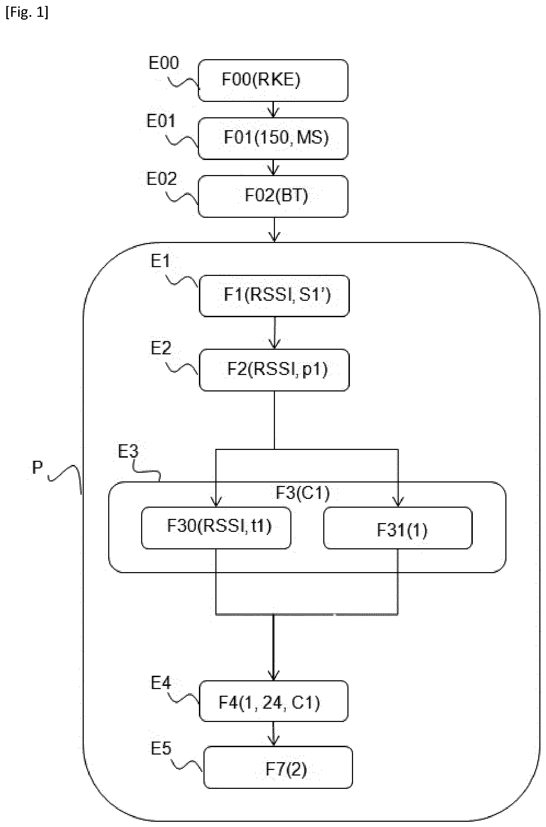

Le procédé de détection P d'un identifiant 1 pour le démarrage passif d'un véhicule 2 est décrit en référence aux figures 1 à 6.

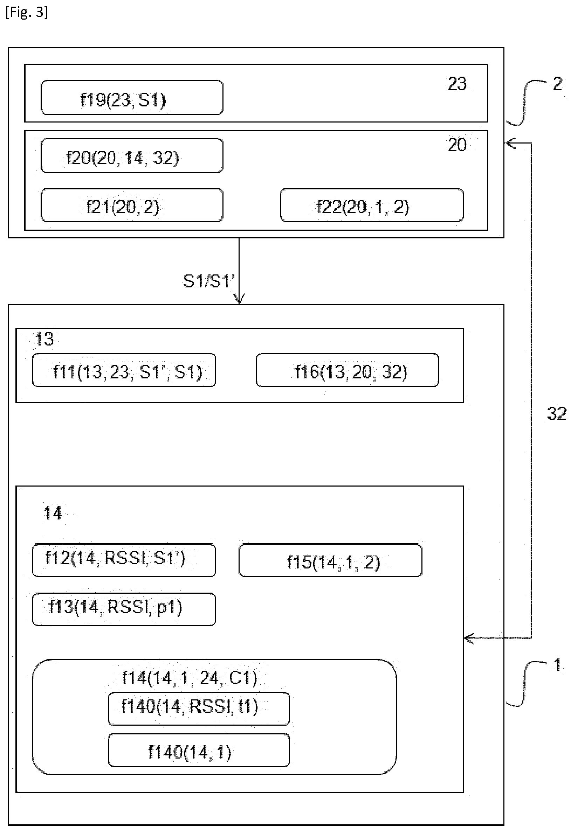

Dans un mode de réalisation non limitatif, le véhicule 2 est un véhicule automobile. Par véhicule automobile, on entend tout type de véhicule motorisé. Ce mode de réalisation est pris comme exemple non limitatif dans la suite de la description. Tel qu'illustré sur la figure 3, le véhicule automobile 2 comprend un habitacle 21 dans lequel se situent :
- une unité centrale électronique 20,
- une console centrale 22,
- un émetteur/récepteur secondaire 23,
- une surface d'accueil 24. Dans un mode de réalisation non limitatif illustré, la surface d'accueil 24 est indépendante de la console centrale 22 et est située près de celle-ci. Dans un autre mode de réalisation non limitatif non illustré, elle se confond avec la console centrale 22.

Dans un mode de réalisation non limitatif, le véhicule 2 comprend en outre une caméra 25 disposée dans l'habitacle 21

L'identifiant 1 permet d'accéder au véhicule automobile 2 et également de démarrer le véhicule automobile 2 de façon passive. C'est une clef virtuelle Dans des exemples non limitatifs, l'identifiant 1 est une clef électronique, un badge, un téléphone mobile intelligent, autrement appelé Smartphone. Le mode de réalisation du Smartphone est pris comme exemple non limitatif dans la suite de la description.

Dans un mode de réalisation non limitatif illustré sur la figure 3, le Smartphone 1 comprend:
- un émetteur/récepteur primaire 13,
- une unité électronique 14,
- une interface homme-machine 15 avec un écran 150.

Dans un mode de réalisation non limitatif, le Smartphone 1 comprend en outre un accéléromètre 16.

Le Smartphone 1 est configuré pour communiquer avec le véhicule automobile 2 selon un protocole de communication sans fil 5, que ce soit pour l'accès au véhicule automobile 2, c'est-à-dire pour ouvrir un ouvrant du véhicule (portière ou coffre), ou pour le démarrage passif du véhicule automobile 2. Dans un mode de réalisation non limitatif, le protocole de communication sans fil 5 est Bluetooth Low Energy^{®}, autrement appelé protocole BLE. Ainsi, dans un mode de réalisation non limitatif, l'émetteur/récepteur secondaire 23 du véhicule automobile 2 et l'émetteur/récepteur primaire 13 de l'identifiant 1 sont des émetteur/récepteurs BLE. Dans d'autres modes de réalisation non limitatifs, le protocole de communication sans fil 5 est MirrorLink^{™} ou WIFI.

Lors du procédé de détection P, on veut déterminer si le Smartphone 1 se trouve en contact ou à proximité immédiate de la surface d'accueil 24 du véhicule automobile 2, et ceci pour lancer une calibration qui va permettre le démarrage passif du véhicule automobile 2 par la suite. Par proximité immédiate de la surface d'accueil 24, on entend que le Smartphone 1 est à une distance d1 inférieure à environ vingt centimètres. On rappelle que pour le démarrage passif d'un véhicule 2 où une clef virtuelle telle que le Smartphone est utilisée à la place d'une clef physique, une calibration de l'émetteur/récepteur primaire 13 du Smartphone 1 avec l'émetteur/récepteur secondaire 23 du véhicule automobile 2 est nécessaire avant chaque première utilisation des fonctions passives avec un nouveau Smartphone 1. Tant que cette calibration n'est pas effectuée, l'utilisateur ne peut utiliser les fonctions passives du véhicule 2.

Dans un mode de réalisation non limitatif illustré sur la figure 1, les étapes initiales suivantes sont réalisées pour lancer le procédé de détection P. Dans une étape E00 illustrée F00(RKE), un premier accès au véhicule automobile 2 est réalisé lorsque un bouton d'accès à distance, autrement appelé RKE « Remote Keyless Entry » intégré dans une application dédiée du Smartphone 1, est activé par l'utilisateur. Lors de ce premier accès, une première authentification entre le Smartphone 1 et l'unité centrale électronique 20 du véhicule automobile 2 qui autorise l'accès est réalisé. Dans une étape E01 illustrée F01(150, MS), l'interface homme-machine 15 affiche sur l'écran 150 du Smartphone 1 un message MS à l'intention de l'utilisateur pour démarrer le véhicule manuellement et poser le Smartphone 1 sur la surface d'accueil 24. Dans une étape E02 illustrée F02(BT), l'utilisateur peut démarrer le véhicule 2 à l'aide d'un bouton de démarrage BT, généralement situé au niveau de la console centrale 22. Puis il peut utiliser le véhicule automobile 2 sans se soucier de la calibration. La calibration est lancée automatiquement lorsque le Smartphone 1 est détecté comme étant en contact ou à proximité immédiate de la surface d'accueil 24, par exemple lorsqu'il est posé sur la surface d'accueil 24, et ce de façon stable. Comme décrit ci-après, les conditions pour considérer que le Smartphone 1 est posé de façon stable sur la surface d'accueil 24 ou de façon stable à proximité immédiate de celle-ci se basent sur:
- (a) un niveau de mesures de puissance en réception RSSI de signaux reçus supérieur ou égal à une puissance seuil p1, et
- (b) un niveau de mesures de puissance en réception RSSI de signaux reçus stable, et/ou,
- (c) un indicateur que le Smartphone 1 est dans une situation stable, à savoir qu'il est relativement immobile.

Ainsi, les conditions a et b, ou a et c, ou a, b et c doivent être réunies.

Ainsi, tel qu'illustré sur la figure 1, dans un mode de réalisation non limitatif, le procédé de détection P de l'identifiant 1 pour le démarrage passif du véhicule automobile 2, comprend les étapes suivantes.

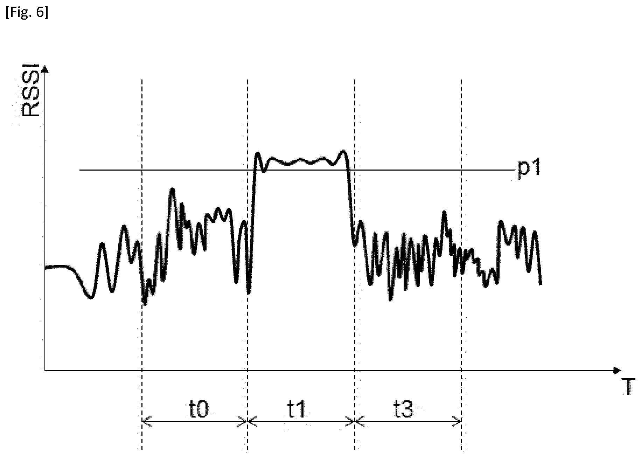

Dans une étape E1) illustrée F1(RSSI, S1'), une pluralité de mesures de puissance en réception RSSI de signaux reçus S1', autrement appelées mesures RSSI, connues sous l'acronyme anglo-saxon RSSI « Received Strength Indication », est réalisée. Dans un premier mode de réalisation non limitatif, les signaux reçus S1' sont reçus par l'émetteur/récepteur primaire 13 du Smartphone 1. Ils correspondent à des signaux émis S1 par l'émetteur/récepteur secondaire 23 du véhicule automobile 2. Dans un deuxième mode de réalisation non limitatif, c'est l'inverse. A savoir, les signaux reçus S1' sont reçus par l'émetteur/récepteur secondaire 23 du véhicule automobile 2. Ils correspondent à des signaux émis S1 par l'émetteur/récepteur primaire 13 du Smartphone 1. La réalisation de mesures RSSI étant connue de l'homme du métier, elle n'est pas décrite ici. Dans un mode de réalisation non limitatif, les signaux émis S1 sont des signaux de diffusion connus sous le nom de « Advertising » dans le langage anglo-saxon et diffusés sur trois canaux de diffusion 37, 38 et 39 dans le protocole de communication BLE, connus de l'homme du métier. Dans un autre mode de réalisation non limitatif, l'émetteur/récepteur primaire 13 et l'émetteur/récepteur 23 sont connectés et les signaux émis S1 sont des signaux connus sous le nom de « data packets ». La figure 6 illustre un exemple non limitatif d'un ensemble de mesures RSSI réalisées pendant un temps T. Les mesures RSSI sont enregistrées en mémoire soit du Smartphone 1, soit de l'unité centrale électronique 20 du véhicule 2

Dans une étape E2), illustrée F2(RSSI, p1), les mesures RSSI sont comparées avec une puissance seuil p1 (illustrée sur la figure 6). Dans un premier mode de réalisation non limitatif, c'est le Smartphone 1 qui réalise cette étape, à savoir lorsque les signaux reçus S1' sont reçus par l'émetteur/récepteur primaire 13 du Smartphone 1. En particulier c'est l'unité électronique 14 du Smartphone 1 qui réalise cette étape. Dans un deuxième mode de réalisation non limitatif, c'est l'unité centrale électronique 20 du véhicule automobile 2 qui réalise cette étape, à savoir lorsque les signaux reçus S1' sont reçus par l'émetteur/récepteur secondaire 23 du véhicule automobile 2. Dans l'exemple non limitatif de la figure 6, on observe que pendant l'intervalle de temps t1, les mesures RSSI ont un niveau supérieur à la puissance seuil p1. Cela signifie que le Smartphone 1 est posé sur la surface d'accueil 24 ou à proximité immédiate. Sur la figure 6, on observe également que pendant les intervalles de temps t0 et t3, les mesures RSSI ont un niveau faible par rapport à la puissance seuil p1. Cela signifie que le Smartphone 1 est éloigné de la surface d'accueil 24. Il n'est donc ni posé sur la surface d'accueil 24, ni à proximité immédiate.

Dans un premier mode de réalisation non limitatif, la puissance seuil p1 est déterminée en fonction d'une courbe de décroissance de puissance par rapport à la distance (non illustrée), connue de l'homme du métier, autrement appelée courbe de régression ou courbe RSSI. En abscisse, on trouve la distance (en centimètres), en ordonnée, on trouve la puissance (en décibels par exemple). Sur la courbe de régression il existe un premier intervalle dans lequel la courbe présente une forte pente et un deuxième intervalle dans lequel la courbe présente une pente faible. La puissance seuil p1 est définie en fonction d'une distance seuil ds1 appartenant au premier intervalle. Dans un exemple non limitatif, la distance seuil ds1 est égale à environ vingt centimètres. On remarquera que dans ce cas, la distance seuil ds1 est égale à la distance d1 définie pour la proximité immédiate du Smartphone 1 par rapport à la surface d'accueil 24. Dans un autre exemple non limitatif, la distance seuil ds1 est égale à zéro. Lorsqu'elle est égale à zéro, cela correspond au Smartphone 1 en contact avec la surface d'accueil 24. Dans un mode de réalisation non limitatif, la courbe de régression utilisée est programmée en mémoire dans le Smartphone 1. Dans une première variante de réalisation non limitative, la courbe de régression utilisée est une courbe théorique prise pour tout type de Smartphone 1. Dans une deuxième variante de réalisation non limitative, la courbe de régression utilisée est spécifique à chaque type de Smartphone 1. On notera que dans le cas où c'est l'unité centrale électronique 20 du véhicule automobile 2 qui effectue la comparaison avec la puissance seuil p1, alors, le Smartphone 1 via son unité électronique 14 enverra la valeur de la puissance seuil p1 au préalable à ladite unité centrale électronique 20 pour ladite comparaison.

Dans un deuxième mode de réalisation non limitatif, la puissance seuil p1 est une puissance maximum mesurée sur l'ensemble des mesures RSSI réalisées au cours du temps pendant une phase d'accès et une phase où le Smartphone 1 est posé sur la surface d'accueil 24. Tel qu'illustré sur la figure 6 qui représente un ensemble de mesures RSSI réalisées pendant un temps T, dans l'intervalle de temps t0 (phase d'accès), lorsque le Smartphone 1 se trouve dans la main de l'utilisateur, les mesures RSSI ont des valeurs très variables. Dans l'intervalle de temps t1 (phase de pose), lorsque le Smartphone 1 est en contact ou à proximité immédiate de la surface d'accueil 24, les mesures RSSI ont des valeurs à peu près équivalentes et sont supérieures à celles de l'intervalle t0. La puissance maximum mesurée a été prise dans un tel intervalle t1. Dans cet intervalle de temps t1, le Smartphone 1 est immobile, à savoir il est stable. Dans l'intervalle de temps t3, le Smartphone 2 n'est plus immobile, à savoir il n'est plus stable, il bouge de nouveau.

Dans une étape E3), illustrée F3(C1), on vérifie la condition de stabilité C1. Dans un premier mode de réalisation non limitatif illustré F30(RSSI, t1), la vérification de la condition de stabilité C1 comprend la vérification que les mesures de puissance en réception RSSI sont stables pendant un intervalle de temps t1. Dans un deuxième mode de réalisation non limitatif illustré F31(1), la vérification de la condition de stabilité C1 comprend la vérification la stabilité de l'identifiant 1. Dans un troisième mode de réalisation non limitatif, la vérification de la condition de stabilité C1 comprend :
- (a) la vérification que les mesures de puissance en réception RSSI sont stables pendant un intervalle de temps t1, et
- (b) la vérification que l'identifiant 1 est stable, à savoir immobile.

On notera que si la calibration est réalisée pendant que les mesures RSSI ne sont pas stables, on risque de mauvaises performances du démarrage passif. Il en est de même si l'identifiant n'est pas stable. Dans un mode de réalisation non limitatif, l'intervalle de temps t1 est inférieur à cinq secondes. Sur la figure 6, on observe clairement un maximum stable de mesures RSSI quand le Smartphone 1 est posé sur la surface d'accueil 24 ou à proximité immédiate pendant l'intervalle de temps t1. On surveille ainsi pendant l'intervalle de temps t1 l'évolution de la puissance. Dans un premier mode de réalisation non limitatif, pour vérifier que le Smartphone 1 est stable, on utilise un accéléromètre 16 intégré dans ledit Smartphone 1. Par stable, on entend que le Smartphone 1 ne bouge pas par rapport au référentiel véhicule automobile 2. Ainsi, l'accéléromètre 16 indique que le Smartphone 1 est posé sur une surface d'accueil 24 immobile, ou éventuellement sur une surface d'accueil 24 qui n'accélère pas plus que le véhicule automobile 2 qui roule sur une route plane. On notera que les informations d'accélération peuvent être confirmées par l'information « moteur tournant ». En effet, si on détecte que le Smartphone 1 bouge (accélère) alors que le moteur est stoppé, cela veut dire que c'est l'utilisateur qui fait bouger le Smartphone 1. A ce moment, la calibration n'est pas lancée. Ainsi, lorsqu'il est stable le Smartphone 1 est dit immobile. Dans un deuxième mode de réalisation non limitatif, pour vérifier que le Smartphone 1 est stable, on utilise la caméra 25 du véhicule automobile 2. Les images acquises par cette caméra permettent de déterminer si le Smartphone 1 est immobile ou non.

Sur la figure 6, on observe clairement que pendant les intervalles de temps t0 et t3, les mesures RSSI ne sont pas stables. Il y a de grosses variations des mesures RSSI. Cela signifie que le Smartphone 1 n'est pas stable, il est en mouvement.

Dans une étape E4), illustrée F4(1, 24, C1), on détecte que l'identifiant 1 est en contact ou à proximité immédiate de la surface d'accueil 24 si :
- (a) les mesures de puissance en réception RSSI sont supérieures ou égales à la puissance seuil p1 (illustrée sur la figure 6) et
- (b) si la condition de stabilité C1 est vérifiée.

Ainsi, si les deux conditions a et b ci-dessus sont remplies, la détection du Smartphone 1 en contact ou à proximité immédiate de la surface d'accueil 24 est validée. On notera que le fait de détecter l'identifiant 1 en contact ou à proximité immédiate de la surface d'accueil 24 revient à localiser le Smartphone 1 à l'intérieur du véhicule automobile 2. Suite à cette détection, la calibration peut ainsi commencer. On rappelle que tant que la calibration n'est pas effectuée, les fonctions passives du véhicule automobile 2 ne peuvent être utilisées.

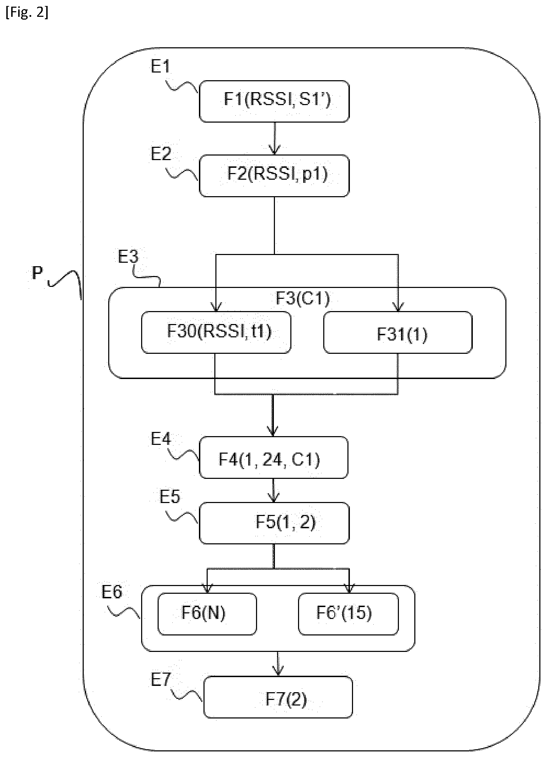

Ainsi, tel qu'illustré sur la figure 2, dans un mode de réalisation non limitatif, le procédé de détection comprend en outre, dans une étape E5), illustrée F5(1, 2), une calibration dudit émetteur/récepteur primaire 13 avec ledit émetteur/récepteur secondaire 23 suite à ladite détection dudit identifiant 1 en contact ou à proximité immédiate de la surface d'accueil 24. Cette calibration est donc réalisée lors de la première utilisation dudit Smartphone 1 avec ledit véhicule automobile 2. On notera qu'on sait que le Smartphone 1 est utilisé pour la première fois s'il n'existe pas de données de calibration (niveau de puissance de référence) correspondantes à ce Smartphone 1.

La calibration permet de mesurer un niveau moyen d'émission et/ou de réception radio (dans l'exemple non limitatif BLE) du Smartphone 1. Ce niveau moyen va servir de niveau de puissance de référence Pref pour la localisation de la position du Smartphone 1 afin de garantir que les distances de démarrage passif sont conformes aux critères de la réglementation Thatcham bien connue de l'homme du métier. Dans un mode de réalisation non limitatif, le niveau de puissance de référence Pref est sauvegardée dans une mémoire de l'unité centrale électronique 20 du véhicule automobile 2. Selon la réglementation Thatcham, il faut s'assurer que l'identifiant 1 est à l'intérieur du véhicule automobile 2 avec une marge n'excédant pas vingt centimètres autour du véhicule automobile 2. Ainsi, à la puissance de référence Pref sera associée une distance de référence dref qui est inférieure au rayon r1 d'un cercle C1 inscrit dans l'habitacle 21 du véhicule automobile V, ledit cercle C1 étant centré sur ledit émetteur/récepteur secondaire 23 du véhicule automobile 2, tel qu'illustré sur la figure 3. Le cercle C1 définit la zone limite intérieure de l'habitacle 21 centré sur l'émetteur/récepteur secondaire 23 du véhicule automobile 2. Au-delà, on peut se trouver à l'extérieur du véhicule automobile 2. Le cercle C1 correspond ainsi à l'émission de l'émetteur/récepteur secondaire 23 à une certaine puissance. On définit une distance de référence dref inférieure au rayon r1 de ce cercle C1 pour éviter le démarrage par des identifiants 1 se trouvant à l'extérieur du cercle C1. On notera que l'émetteur/récepteur secondaire 23 émet à puissance constante, dite puissance nominale. La puissance nominale est la puissance de fonctionnement de l'émetteur/récepteur secondaire 23. La puissance nominale de l'émetteur/récepteur secondaire 23 peut être modifiée selon le résultat de la calibration. La calibration permet en effet de calibrer le canal de communication entre l'émetteur/récepteur secondaire 23 et l'émetteur/récepteur primaire 13. Le calibrage est fait soit par l'identifiant 1, soit par le véhicule 2. La calibration entre un identifiant 1 et un véhicule automobile 2 étant bien connue de l'homme du métier, elle n'est pas décrite ici.

Dans un mode de réalisation non limitatif, la calibration est réalisée pendant un temps d'environ dix secondes. La calibration permet d'ajuster le niveau de la puissance nominale pour obtenir un niveau de puissance de référence Pref qui va être utilisé pour les fonctions passives du véhicule automobile 2. Ce niveau de référence Pref permet de définir la distance de référence dref. Dans un mode de réalisation non limitatif, une fois la calibration terminée, une notification est affichée sur l'interface homme-machine 15 du Smartphone 1, dans un exemple non limitatif sur son écran 150 pour indiquer à l'utilisateur qu'il peut utiliser son Smartphone 1 pour un démarrage passif du véhicule automobile 2. Lors des usages suivants du Smartphone 1, les fonctions passives seront alors disponibles.

Dans des modes de réalisation non limitatifs, dans une étape E6) :
- (a) illustrée F6 (N), la calibration est relancée de façon automatique tous les N démarrages du véhicule 2, avec N supérieur à cinquante. Ainsi, si les caractéristiques du Smartphone 1 varient dans le temps (par exemple sa puissance d'émission diminue en raison de son vieillissement, ou il y a des modifications physiques du Smartphone 1 qui jouent sur sa puissance d'émission etc.), il y a une adaptation sans interaction avec l'utilisateur, ou
- (b) illustrée F6'(15), la calibration est relancée via l'interface homme-machine 15 du Smartphone 1 par l'utilisateur si ce dernier détecte un mauvais comportement du démarrage, par exemple, lorsque l'utilisateur trouve que les performances/l'expérience utilisateur de la fonction de démarrage passif sont mauvaises ou instables.

Bien entendu, d'autres cas de relance de la calibration peuvent être envisagés tels que dans des exemples non limitatifs, s'il existe une mise à jour système du Smartphone 1, à savoir de ses composants électroniques, applicatifs, ou de son système d'exploitation (une mise à jour du système pourrait changer le résultat de la mesure, ou d'autres modifications logicielles qui vont gérer la puissance d'émission différemment), ou si les mesures RSSI sont particulièrement hautes par rapport au niveau moyen d'émission et/ou de réception radio mesuré lors de la calibration. Cela survient si dans des exemples non limitatifs, la première calibration était mauvaise, ou si les conditions ont changé (changement d'étui de Smartphone 1, etc.). Dans un mode de réalisation non limitatif, la calibration est annulée si le Smartphone 1 redevient mobile lors de ladite calibration. Par mobile, on entend que le Smartphone 1 est mobile par rapport au référentiel véhicule automobile 2. Il est ainsi en mouvement par rapport à ce référentiel.

Tel qu'illustré sur la figure 2, dans une étape E7) illustrée F7(2), on autorise le démarrage passif du véhicule automobile 2, suite à ladite détection et suite à ladite calibration. Après la première utilisation du Smartphone 1 avec le véhicule automobile 2, la fonction de démarrage passif peut être utilisée avec le Smartphone 1. Il n'est pas nécessaire de relancer la calibration à chaque démarrage passif. Aussi, tel qu'illustré sur la figure 1, l'autorisation de démarrage passif du véhicule automobile 2 est illustrée à l'étape E5) illustrée F7(2) suite à la détection du Smartphone 1 en contact ou à proximité immédiate de la surface d'accueil 24.

Ainsi, pour mettre en œuvre le procédé de détection P décrit précédemment, le Smartphone 1 et le véhicule automobile 2 sont configurés selon deux modes de réalisation non limitatifs décrits ci-après.

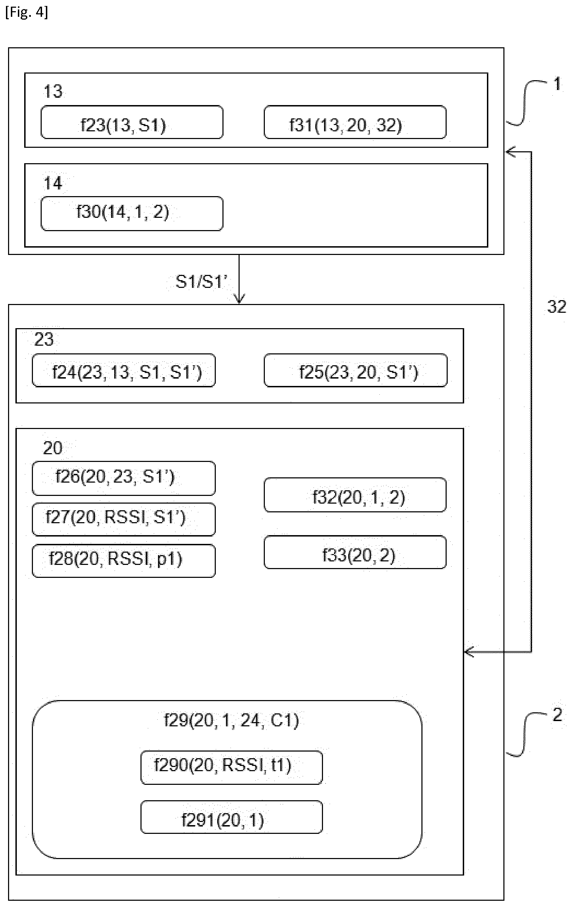

Tel qu'illustré sur la figure 4, selon un premier mode de réalisation non limitatif, le Smartphone 1 est configuré pour :
- (a) recevoir des signaux S1' correspondants à des signaux émis S1 de l'émetteur/récepteur secondaire 23 (fonction illustrée (f11(13, 23, S1', S1)),
- (b) réaliser une pluralité de mesures de puissance en réception RSSI desdits signaux reçus S1' (fonction illustrée (f12(14, RSSI, S1')),
- (c) comparer lesdites mesures de puissance en réception RSSI avec la puissance seuil p1 (fonction illustrée (f13(14, RSSI, p1)),
- (d) détecter qu'il est en contact ou à proximité immédiate de ladite surface d'accueil 24 si les mesures de puissance en réception RSSI sont supérieures ou égales à la puissance seuil p1 et si la condition de stabilité C1 est vérifiée (fonction illustrée (f14(14, 1, 24, C1)).

On notera que la fonction a est réalisée par l'émetteur/récepteur primaire 13 du Smartphone 1, et les fonctions b à d par l'unité électronique 14 du Smartphone 1. Dans un premier mode de réalisation non limitatif, le Smartphone 1 vérifie la condition de stabilité C1 en vérifiant la stabilité des mesures de puissance en réception RSSI sur un intervalle de temps t1 (fonction illustrée (f140(14, RSSI, t1)). Dans un deuxième mode de réalisation non limitatif, le Smartphone 1 vérifie la condition de stabilité C1 en vérifiant sa propre stabilité, à savoir s'il est immobile (fonction illustrée (f140(14, 1)). Dans ce cas, le Smartphone 1 se base soit sur les données de l'accéléromètre 16, et/ou sur les données de la caméra 25. Dans un troisième mode de réalisation non limitatif, le Smartphone 1 vérifie la condition de stabilité C1 en vérifiant la stabilité des mesures de puissance en réception RSSI sur l'intervalle de temps t1 et également en vérifiant sa propre stabilité.

Dans une première variante de réalisation non limitative de ce premier mode de réalisation non limitatif, le Smartphone 1 est en outre configuré pour :
- (a) suite à ladite détection dudit identifiant 1 en contact ou à proximité immédiate de la surface d'accueil 4, lancer une calibration entre l'identifiant 1 et le véhicule automobile 2 lors d'une première utilisation de l'identifiant 1 avec le véhicule automobile 2 (fonction illustrée f15(14, 1, 2)),
- (b) envoyer un signal 32 à l'unité centrale électronique 20 du véhicule 2 suite à ladite détection et à ladite calibration pour autoriser le démarrage passif du véhicule automobile 2 (fonction illustrée (f16(13, 20, 32)).

On notera que la fonction b est réalisée par l'émetteur/récepteur primaire 13 du Smartphone 1, et la fonction a par l'unité électronique 14 du Smartphone 1.

Tel qu'illustré sur la figure 4, selon le premier mode de réalisation non limitatif, l'émetteur/récepteur secondaire 23 du véhicule automobile 2 est configuré pour émettre des signaux S1 (fonction illustrée f19(23, S1)).

Dans une première variante de réalisation non limitative de ce premier mode de réalisation non limitatif, l'émetteur/récepteur secondaire 23 est en outre configuré pour :
- (a) suite à ladite détection et à ladite calibration recevoir ledit signal 32 envoyé par ledit identifiant 1 pour autoriser le démarrage passif du véhicule automobile 2 (fonction illustrée (f20(20, 14, 32)),
- (b) autoriser le démarrage passif du véhicule automobile 2 suite à ladite détection et ladite calibration (fonction illustrée (f21(20, 2)).

On notera que les fonctions a et b sont réalisées par l'unité centrale électronique 20 du véhicule automobile 2.

Dans une deuxième variante de réalisation non limitative de ce premier mode de réalisation non limitatif, l'émetteur/récepteur secondaire 23 est en outre configuré pour :
- (a) suite à ladite détection dudit identifiant 1 en contact ou à proximité immédiate de la surface d'accueil 4, lancer une calibration entre l'identifiant 1 et le véhicule automobile 2 lors d'une première utilisation de l'identifiant 1 avec le véhicule automobile 2 (fonction illustrée f22(20, 1, 2)),
- (b) autoriser le démarrage passif du véhicule automobile 2 suite à ladite détection et ladite calibration (fonction illustrée (f21(20, 2)).

On notera que les fonctions a et b sont réalisées par l'unité centrale électronique 20 du véhicule automobile 2.

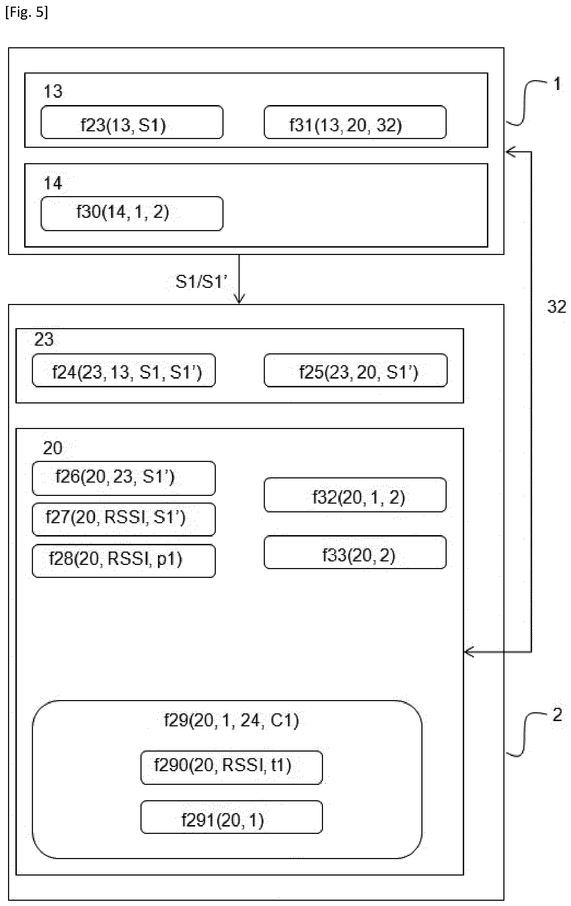

Tel qu'illustré sur la figure 5, selon un deuxième mode de réalisation non limitatif, le Smartphone 1 est configuré pour :
- (a) émettre des signaux S1 (fonction illustrée (f23(13, S1)) via son émetteur/récepteur primaire 13.

Tel qu'illustré sur la figure 5, selon le deuxième mode de réalisation non limitatif, l'émetteur/récepteur secondaire 23 du véhicule automobile 2 est configuré pour :
- (a) recevoir des signaux S1' correspondants à des signaux S1 émis par l'identifiant 1 (fonction illustrée f24(23, 13, S1, S1')),
- (b) transmettre les signaux S1' reçus, autrement appelés signaux reçus S1', à l'unité centrale électronique 20 (fonction illustrée f25(23, 20, 51')).

Tel qu'illustré sur la figure 5, selon le deuxième mode de réalisation non limitatif, l'unité centrale électronique 20 est configurée pour :
- (a) recevoir des signaux reçus S1' de l'émetteur/récepteur secondaire 23 (fonction illustrée (f26(20, 23, S1')),
- (b) réaliser une pluralité de mesures de puissance RSSI en réception de signaux reçus S1', signaux reçus S1' correspondants à des signaux émis S1 par l'émetteur/récepteur primaire 13 de l'identifiant 1 pour le démarrage passif dudit véhicule automobile 2 (fonction illustrée (f27(20, RSSI, S1')),
- (c) comparer lesdites mesures de puissance en réception RSSI avec la puissance seuil p1 (fonction illustrée (f28(20, RSSI, p1)),
- (d) détecter que ledit identifiant 1 est en contact ou à proximité immédiate de ladite surface d'accueil 24 si les mesures de puissance en réception RSSI sont supérieures ou égales à la puissance seuil p1 et si la condition de stabilité C1 est vérifiée (fonction illustrée (f29(20, 1, 24, C1)).

Dans un premier mode de réalisation non limitatif, l'unité centrale électronique 20 vérifie la condition de stabilité C1 en vérifiant la stabilité des mesures de puissance en réception RSSI sur un intervalle de temps t1 (fonction illustrée (f290(20, RSSI, t1)). Dans un deuxième mode de réalisation non limitatif, l'unité centrale électronique 20 vérifie la condition de stabilité C1 en vérifiant la stabilité du Smartphone 1, à savoir s'il est immobile (fonction illustrée (f291(20, 1)). Dans ce cas, l'unité centrale électronique 20 se base soit sur les données de l'accéléromètre 16, et/ou sur les données de la caméra 25. Dans un troisième mode de réalisation non limitatif, l'unité centrale électronique 20 vérifie la condition de stabilité C1 en vérifiant la stabilité des mesures de puissance en réception RSSI sur l'intervalle de temps t1 et également en vérifiant la stabilité du Smartphone 1.

Dans une première variante de réalisation non limitative de ce deuxième mode de réalisation non limitatif, le Smartphone 1 est en outre configuré pour :
- (a) suite à ladite détection qu'il est en contact ou à proximité immédiate de la surface d'accueil 4, lancer une calibration entre lui et le véhicule automobile 2 lors d'une première utilisation avec le véhicule automobile 2 (fonction illustrée f30(14, 1, 2)),
- (b) envoyer un signal 32 à l'unité centrale électronique 20 du véhicule 2 suite à ladite détection et à ladite calibration pour autoriser le démarrage passif du véhicule automobile 2 (fonction illustrée (f31(13, 20, 32)).

On notera que la fonction b est réalisée par l'émetteur/récepteur primaire 13 du Smartphone 1, et la fonction a par l'unité électronique 14 du Smartphone 1.

Dans une deuxième variante de réalisation non limitative de ce deuxième mode de réalisation non limitatif, le véhicule automobile 2 est en outre configuré pour :
- (a) suite à ladite détection dudit identifiant 1 en contact ou à proximité immédiate de la surface d'accueil 4, lancer une calibration entre l'identifiant 1 et le véhicule automobile 2 lors d'une première utilisation de l'identifiant 1 avec le véhicule automobile 2 (fonction illustrée f32(20, 1, 2)),
- (b) autoriser le démarrage passif du véhicule automobile 2 suite à ladite détection et ladite calibration (fonction illustrée (f33(20, 2)).

On notera que les fonctions a et b sont réalisées par l'unité centrale électronique 20 du véhicule 2.

Bien entendu la description de l'invention n'est pas limitée aux modes de réalisation décrits ci-dessus et au domaine décrit ci-dessus.

Ainsi, dans le cas où le véhicule 2 comprend une pluralité d'émetteur/récepteurs répartis sur le véhicule 2, tel que dans un exemple non limitatif une pluralité de balises, utilisés pour déterminer la position de l'identifiant 1, chaque émetteur/récepteur pourra être calibré avec l'identifiant 1 suite à la détection de l'identifiant 1 en contact ou à proximité immédiate de la surface d'accueil 24.

Ainsi, l'invention décrite présente notamment les avantages suivants :
- elle permet de masquer la calibration à l'utilisateur en devinant automatiquement le moment où elle doit être réalisée ce qui permet d'éviter à l'utilisateur d'intervenir pour lancer la calibration. La calibration est ainsi réalisée de manière transparente à l'utilisateur,
- en évitant à l'utilisateur d'intervenir pour lancer la calibration, cela évite qu'il ne fausse volontairement ou involontairement ladite calibration.. Par exemple, il peut fausser involontairement la calibration s'il fait bouger ou tomber l'identifiant 1 pendant la calibration. Il peut fausser volontairement la calibration s'il maintient l'identifiant 1 loin de la surface d'accueil 24. Ainsi, on évite que les distantes autorisées pour le démarrage ne soient pas conformes aux critères Thatcham,
- lorsque l'utilisateur accède à un véhicule de location ou d'entreprise, cela lui évite de lancer lui-même la calibration à chaque fois qu'il accède à un nouveau véhicule dans une flotte de véhicules de location ou dans une flotte de véhicules d'entreprise,
- elle évite de calibrer chaque modèle d'identifiant en laboratoire et d'intégrer une base de données de calibration dans un système de détection d'un identifiant du véhicule contrairement à un état de la technique antérieur, cette solution de l'état de la technique antérieur étant limitée pour les raisons suivantes : elle ne peut couvrir tout le marché des identifiants ; il y a un délai minimum de plusieurs semaines entre la sortie d'un nouveau modèle ou d'une nouvelle version du système d'exploitation d'un identifiant sur le marché et la mise à jour du dispositif de localisation pour le supporter ; elle ne prend pas en compte les variations des caractéristiques d'un échantillon à l'autre d'un même modèle d'identifiant, ou encore les variations d'intégration d'un véhicule à l'autre (finition aluminium etc.), la géométrie variable des véhicules, et les variations d'intégration du téléphone (housse, porte carte etc.), toutes ces variations jouant sur les mesures RSSI,
- elle permet d'améliorer l'expérience utilisateur et est plus fiable du point de vue Thatcham,
- même si l'utilisateur a la possibilité de lancer manuellement une calibration, l'identifiant 1 peut par la suite calibrer de nouveau son émetteur/récepteur primaire 13 automatiquement avec l'émetteur/récepteur secondaire 23 du véhicule automobile 2.

## Revendications

1. Procédé de détection (P) d'un identifiant (1) pour le démarrage passif d'un véhicule (2), ledit identifiant (1) comprenant un émetteur/récepteur primaire (13) et ledit véhicule (2) comprenant un émetteur/récepteur secondaire (23) et une surface d'accueil (24) configurée pour accueillir ledit identifiant (1), selon lequel ledit procédé de détection (P) comprend :
- une réalisation (E1) d'une pluralité de mesures de puissance en réception (RSSI) de signaux reçus (S1'),
- une comparaison (E2) desdites mesures de puissance en réception (RSSI) avec une puissance seuil (p1),
- une détection (E4) que ledit identifiant (1) est en contact ou à proximité immédiate de ladite surface d'accueil (24) si les mesures de puissance en réception (RSSI) sont supérieures ou égales à la puissance seuil (p1) et si une condition de stabilité (C1) est vérifiée,
- la vérification que ledit identifiant (1) est stable est réalisée via un accéléromètre (16) intégré dans ledit identifiant (1) ou via une caméra (25) intégrée dans ledit véhicule (2).

2. Procédé de détection (P) selon la revendication 1, selon lequel les signaux reçus (S1') sont reçus par ledit émetteur/récepteur primaire (13) et les signaux émis (S1) sont émis par ledit émetteur/récepteur secondaire (23), ou inversement.

3. Procédé de détection (P) selon l'une quelconque des revendications précédentes, selon lequel ledit identifiant (1) est à proximité immédiate de ladite surface d'accueil (24) lorsqu'il est à une distance (d1) inférieure à environ vingt centimètres.

4. Procédé de détection (P) selon l'une quelconque des revendications précédentes, selon lequel la condition de stabilité (C1) est que lesdites mesures de puissance en réception (RSSI) sont stables sur ledit intervalle de temps (t1) et/ou que ledit identifiant (1) est stable.

5. Procédé de détection (P) selon l'une quelconque des revendications précédentes, selon lequel l'intervalle de temps (t1) est inférieur à environ cinq secondes.

6. Procédé de détection (P) selon l'une quelconque des revendications précédentes, selon lequel ledit procédé de détection (P) comprend en outre une calibration (E5) automatique dudit émetteur/récepteur primaire (13) avec ledit émetteur/récepteur secondaire (23) suite à ladite détection dudit identifiant (1) en contact ou à proximité immédiate de ladite surface d'accueil (24).

7. Procédé de détection (P) selon la revendication précédente, selon lequel ledit procédé de détection (P) comprend en outre la relance d'une calibration de façon automatique tous les N démarrages dudit véhicule (2), avec N supérieur ou égal à cinquante.

8. Procédé de détection (P) selon la revendication 6, selon lequel ledit procédé de détection (P) comprend en outre la relance de ladite calibration via une interface homme-machine (15) dudit identifiant (1).

9. Procédé de détection (P) selon l'une quelconque des revendications précédentes 6 à 8, selon lequel ledit procédé de détection (P) comprend en outre l'annulation de ladite calibration si ledit identifiant (1) redevient mobile lors de ladite calibration.

10. Procédé de détection (P) selon l'une quelconque des revendications précédentes 6 à 9, selon lequel ledit procédé de détection (P) comprend en outre une autorisation (E6) de démarrage passif dudit véhicule (2) suite à ladite détection et à ladite calibration.

11. Procédé de détection (P) selon la revendication précédente, selon lequel ledit identifiant (1) est un téléphone mobile intelligent.

12. Identifiant (1)) pour le démarrage passif d'un véhicule (2), ledit identifiant (1) comprenant un émetteur/récepteur primaire (13) et un accéléromètre (16) intégré et ledit véhicule (2) comprenant un émetteur/récepteur secondaire (23) et une surface d'accueil (24) configurée pour accueillir ledit identifiant (1), selon lequel ledit identifiant (1) est configuré pour:
- réaliser une pluralité de mesures de puissance en réception (RSSI) de signaux reçus (S1'), signaux reçus (S1') correspondants à des signaux émis (S1) par ledit émetteur/récepteur secondaire (23),
- comparer lesdites mesures de puissance en réception (RSSI) avec une puissance seuil (p1),
- détecter qu'il est en contact ou à proximité immédiate de ladite surface d'accueil (24) si les mesures de puissance en réception (RSSI) sont supérieures ou égales à la puissance seuil (p1) et si une condition de stabilité (C1) est vérifiée via l'accéléromètre (16) intégré.

13. Identifiant (1) selon la revendication précédente, selon lequel ledit identifiant (1) est un téléphone mobile intelligent.

14. Unité centrale électronique (20) d'un véhicule (2) comprenant une caméra intégrée (25), l'unité centrale configurée pour:
- réaliser une pluralité de mesures de puissance en réception (RSSI) de signaux reçus (S1'), signaux reçus (S1') correspondants à des signaux émis (SI) par un émetteur/récepteur primaire (13) d'un identifiant (1) pour le démarrage passif dudit véhicule (2),
- comparer lesdites mesures de puissance en réception (RSSI) avec une puissance seuil (p1),
- détecter que ledit identifiant (1) est en contact ou à proximité immédiate de ladite surface d'accueil (24) si les mesures de puissance en réception (RSSI) sont supérieures ou égales à la puissance seuil (p1) et si une condition de stabilité (C1) est vérifiée via la caméra intégrée (25).

## Patentansprüche

1. Verfahren zum Erkennen (P) einer Kennung (1) für den passiven Start eines Fahrzeugs (2), wobei die Kennung (1) einen primären Sender/Empfänger (13) umfasst und das Fahrzeug (2) einen sekundären Sender/Empfänger (23) und eine Aufnahmefläche (24) umfasst, die zur Aufnahme der Kennung (1) konfiguriert ist, wobei das Erkennungsverfahren (P) umfasst:
- Durchführen (E1) einer Vielzahl von Messungen der Empfangsleistung (RSSI) empfangener Signale (S1'),
- einen Vergleich (E2) der Empfangspowermessungen (RSSI) mit einer Schwellenpower (p1),
- eine Erkennung (E4), dass sich die Kennung (1) in Kontakt oder in unmittelbarer Nähe der Aufnahmefläche (24) befindet, wenn die Empfangsleistungsmessungen (RSSI) größer oder gleich der Schwellenleistung (p1) sind und wenn eine Stabilitätsbedingung (C1) erfüllt ist,
- die Überprüfung, ob sich die Kennung (1) in einem stabilen Zustand befindet, erfolgt über einen in die Kennung (1) integrierten Beschleunigungsmesser (16) oder über eine in das Fahrzeug (2) integrierte Kamera (25).

2. Erfassungsverfahren (P) gemäß Anspruch 1, wobei die empfangenen Signale (S1') von dem primären Sender/Empfänger (13) empfangen werden und die gesendeten Signale (S1) von dem sekundären Sender/Empfänger (23) gesendet werden oder umgekehrt.

3. Erfassungsverfahren (P) nach einem der vorstehenden Ansprüche, wobei sich die Kennung (1) in unmittelbarer Nähe der Aufnahmefläche (24) befindet, wenn sie einen Abstand (d1) von weniger als etwa zwanzig Zentimetern hat.

4. Erfassungsverfahren (P) gemäß einem der vorstehenden Ansprüche, wobei die Stabilitätsbedingung (C1) darin besteht, dass die Empfangsleistungsmessungen (RSSI) über den Zeitabschnitt (t1) stabil sind und/oder dass die Kennung (1) stabil ist.

5. Erfassungsverfahren (P) nach einem der vorstehenden Ansprüche, wobei das Zeitintervall (t1) weniger als etwa fünf Sekunden beträgt.

6. Erfassungsverfahren (P) nach einem der vorstehenden Ansprüche, wobei das Erkennungsverfahren (P) ferner eine automatische Kalibrierung (E5) des primären Sende-/Empfangsgeräts (13) mit dem sekundären Sende-/Empfangsgerät (23) nach der Erkennung der Kennung (1) in Kontakt mit oder in unmittelbarer Nähe der Aufnahmefläche (24) umfasst.

7. Erfassungsverfahren (P) gemäß dem vorhergehenden Anspruch, wobei das Erfassungsverfahren (P) außerdem das automatische Wiederaufnehmen einer Kalibrierung alle N Starts des Fahrzeugs (2) umfasst, wobei N größer oder gleich fünfzig ist.

8. Erfassungsverfahren (P) gemäß Anspruch 6, wobei das Erfassungsverfahren (P) außerdem das erneute Starten der Kalibrierung über eine Mensch-Maschine-Schnittstelle (15) der Kennung (1) umfasst.

9. Erfassungsverfahren (P) gemäß einem der vorstehenden Ansprüche 6 bis 8, wobei das Erfassungsverfahren (P) außerdem das Aufheben der Kalibrierung umfasst, wenn die Kennung (1) während der Kalibrierung wieder beweglich wird.

10. Erfassungsverfahren (P) gemäß einem der vorstehenden Ansprüche 6 bis 9, wobei das Erfassungsverfahren (P) außerdem eine Freigabe (E6) für den passiven Start des Fahrzeugs (2) nach der Erfassung und der Kalibrierung umfasst.

11. Erfassungsverfahren (P) gemäß dem vorhergehenden Anspruch, wobei die Identifikationsvorrichtung (1) ein Smartphone ist.

12. Identifikationsmittel (1) zum passiven Starten eines Fahrzeugs (2), wobei der Identifikator (1) einen primären Sender/Empfänger (13) und einen integrierten Beschleunigungsmesser (16) umfasst und das Fahrzeug (2) einen sekundären Sender/Empfänger (23) und eine Aufnahmefläche (24) umfasst, die zur Aufnahme des Identifikators (1) konfiguriert ist, wobei der Identifikator (1) konfiguriert ist, um:
- eine Vielzahl von Empfangspowermessungen (RSSI) von empfangenen Signalen (S1') durchzuführen, wobei die empfangenen Signale (S1') den vom sekundären Sender/Empfänger (23) gesendeten Signalen (S1) entsprechen,
- die Empfangsleistungsmessungen (RSSI) mit einer Schwellenleistung (p1) zu vergleichen,
- zu erkennen, dass er sich in Kontakt oder in unmittelbarer Nähe der Aufnahmefläche (24) befindet, wenn die Empfangsleistungsmessungen (RSSI) größer oder gleich der Schwellenleistung (p1) sind und wenn eine Stabilitätsbedingung (C1) über den integrierten Beschleunigungsmesser (16) überprüft wird.

13. Identifikator (1) gemäß dem vorherigen Anspruch, wobei der Identifikator (1) ein Smartphone ist.

14. Elektronische Zentraleinheit (20) eines Fahrzeugs (2) mit einer integrierten Kamera (25), wobei die Zentraleinheit dafür konfiguriert ist:
- Durchführung einer Vielzahl von Empfangspowermessungen (RSSI) von empfangenen Signalen (S1'), wobei die empfangenen Signale (S1') den von einem primären Sender/Empfänger (13) einer Kennung (1) zum passiven Starten des Fahrzeugs (2) gesendeten Signalen (SI) entsprechen,
- die Empfangsleistungsmessungen (RSSI) mit einer Schwellenleistung (p1) zu vergleichen,
- Erkennen, dass sich die Identifikationsvorrichtung (1) in Kontakt oder in unmittelbarer Nähe der Aufnahmefläche (24) befindet, wenn die Empfangsleistungsmessungen (RSSI) größer oder gleich der Schwellenleistung (p1) sind und wenn eine Stabilitätsbedingung (C1) über die integrierte Kamera (25) überprüft wird.

## Claims

1. Method for recognising (P) an identifier (1) for the passive starting of a vehicle (2), wherein the identifier (1) comprises a primary transmitter/receiver (13) and the vehicle (2) comprises a secondary transmitter/receiver (23) and a receiving surface (24) configured to receive the identifier (1), the detection method (P) comprising:
- performing (E1) a plurality of measurements of the reception power (RSSI) of received signals (S1'),
- comparing (E2) the reception power measurements (RSSI) with a threshold power (p1),
- recognising (E4) that the identifier (1) is in contact with or in close proximity to the receiving surface (24) if the reception power measurements (RSSI) are greater than or equal to the threshold power (p1) and if a stability condition (C1) is met,
- the verification of whether the identifier (1) is in a stable state is performed by means of an accelerometer (16) integrated into the identifier (1) or by means of a camera (25) integrated into the vehicle (2).

2. Detection method (P) according to claim 1, wherein the received signals (S1') are received by the primary transceiver (13) and the transmitted signals (S1) are transmitted by the secondary transceiver (23) or vice versa.

3. Detection method (P) according to one of the preceding claims, wherein the identifier (1) is located in the immediate vicinity of the recording surface (24) when it is at a distance (d1) of less than approximately twenty centimetres.

4. Detection method (P) according to one of the preceding claims, wherein the stability condition (C1) consists in the reception power measurements (RSSI) being stable over the time period (t1) and/or the identifier (1) being stable.

5. Detection method (P) according to one of the preceding claims, wherein the time interval (t1) is less than approximately five seconds.

6. Detection method (P) according to one of the preceding claims, wherein the detection method (P) further comprises automatic calibration (E5) of the primary transceiver (13) with the secondary transceiver (23) after detection of the identifier (1) in contact with or in close proximity to the receiving surface (24).

7. Detection method (P) according to the preceding claim, wherein the detection method (P) further comprises automatically resuming calibration every N starts of the vehicle (2), wherein N is greater than or equal to fifty.

8. Detection method (P) according to claim 6, wherein the detection method (P) further comprises restarting the calibration via a human-machine interface (15) of the identifier (1).

9. Detection method (P) according to any one of the preceding claims 6 to 8, wherein the detection method (P) further comprises cancelling the calibration if the identifier (1) becomes mobile again during the calibration.

10. Detection method (P) according to one of the preceding claims 6 to 9, wherein the detection method (P) further comprises an enable (E6) for passive starting of the vehicle (2) after detection and calibration.

11. Detection method (P) according to the preceding claim, wherein the identification device (1) is a smartphone.

12. Identification means (1) for passively starting a vehicle (2), wherein the identifier (1) comprises a primary transceiver (13) and an integrated accelerometer (16), and the vehicle (2) comprises a secondary transceiver (23) and a receiving surface (24) configured to receive the identifier (1), wherein the identifier (1) is configured to:
- perform a plurality of reception power measurements (RSSI) of received signals (S1'), wherein the received signals (S1') correspond to the signals (S1) transmitted by the secondary transceiver (23),
- compare the received signal strength measurements (RSSI) with a threshold power (p1),
- recognise that it is in contact with or in close proximity to the receiving surface (24) when the received power measurements (RSSI) are greater than or equal to the threshold power (p1) and when a stability condition (C1) is verified via the integrated accelerometer (16).

13. Identifier (1) according to the previous claim, wherein the identifier (1) is a smartphone.

14. Electronic central processing unit (20) of a vehicle (2) with an integrated camera (25), wherein the central processing unit is configured to:
- performing a plurality of reception power measurements (RSSI) of received signals (S1'), wherein the received signals (S1') correspond to the signals (SI) transmitted by a primary transmitter/receiver (13) of an identifier (1) for passively starting the vehicle (2),
- comparing the reception power measurements (RSSI) with a threshold power (p1),
- recognising that the identification device (1) is in contact with or in close proximity to the receiving surface (24) if the reception power measurements (RSSI) are greater than or equal to the threshold power (p1) and if a stability condition (C1) is verified via the integrated camera (25).
